Europäisches Patentamt

European Patent Office

Office européen des brevets

(11) Numéro de publication: **0 385 839**

**A1**

## DEMANDE DE BREVET EUROPEEN

(21) Numéro de dépôt: **90400520.4**

(22) Date de dépôt: **26.02.90**

(51) Int. Cl.5: **F16L 47/00, F16G 3/02**

(30) Priorité: **28.02.89 FR 8902561**

(43) Date de publication de la demande:
**05.09.90 Bulletin 90/36**

(84) Etats contractants désignés:
**DE ES GB IT SE**

(71) Demandeur: **AEROSPATIALE SOCIETE NATIONALE INDUSTRIELLE**
**37, Boulevard de Montmorency**
**F-75016 Paris(FR)**

(72) Inventeur: **Lamalle, Jean**
**Résidence Muratel**
**F-33290 Blanquefort(FR)**

(74) Mandataire: **Lhuillier, René et al**
**Cabinet Lepeudry, 6 rue du Faubourg St-Honoré**
**F-75008 Paris(FR)**

(54) **Dispositif de liaison mécanique démontable entre l'extrémité d'un tube en matériau composite et un embout.**

(57) L'extrémité d'un tube composite (4) obtenu par enroulement filamentaire de fibres longitudinales est évasée au maximum en forme d'hyperboloïde de révolution, et coopère avec un embout (1) également évasé ; l'extrémité du tube est coïncée entre l'embout et une bague externe (3) se vissant sur un filetage (6) de l'embout.

Application aux liaisons de tubes composites avec des douilles métalliques ou non.

FIG.1

# Dispositif de liaison mécanique démontable entre l'extrémité d'un tube en matériau composite et un embout.

L'invention a pour objet un dispositif de liaison mécanique démontable entre l'extrémité d'un tube en matériau composite et un embout notamment métallique, consistant plus précisément à faire coopérer l'extrémité profilée du tube avec l'embout à l'aide d'une bague additionnelle.

Les tubes ainsi équipés sont destinés soit aux transports de fluide, soit à des transmissions de mouvements ou d'efforts. Dans ces domaines, les tubes en matériau composite munis d'embouts métalliques ont des performances qui peuvent être comparables ou supérieures à celles des tubes métalliques actuels et ils présentent des avantages certains, notamment du fait de leur résistance à la fatigue et à la corrosion et de leur moindre poids. Mais encore faut-il que les dispositifs de liaison entre le tube et son embout métallique soit simples à réaliser, fiables, et capables de supporter des efforts de traction importants, tout en garantissant un maximum de tenue en vibration et une fréquence critique la plus élevée possible.Il faut aussi que ces liaisons mécaniques résistent à des contraintes cycliques d'origine mécanique ou thermique, là où les liaisons collées ne peuvent donner une garantie de tenue suffisante. Enfin il apparaît avantageux de faire en sorte qu'on puisse envisager une démontabilité éventuelle des éléments en présence, ce qui peut faciliter les opérations de maintenance ou de réparation des ensembles de raccordement de tubes.

On connaît un certain nombre de dispositifs de liaisons entre des embouts métalliques et des tubes composites, certains destinés plutôt à des transports de fluide, d'autres pour former des arbres de transmission. Ils nécessitent pour la plupart l'utilisation de joints de colles, avec ou sans interposition d'élastomère.

D'autres dispositifs de liaison utilisent la possibilité de déformation que les composites possèdent avant réticulation de la résine dans le cas de matrice thermodurcissable ou lors d'une montée suffisante en température dans le cas de thermoplastiques comme décrit notamment dans le FR-A 2 564 911.

Il existe aussi des dispositifs à joints multicouches ou encore des systèmes de pose de coquilles en plusieurs parties quand il s'agit d'assurer des liaisons nécessitant des transferts de charges importantes.

Toutes ces liaisons connues présentent en général au moins un, sinon plusieurs des inconvénients suivants qui sont, l'indémontabilité de l'ensemble embout-tube, une tenue qui ne dépend que de la colle liant les embouts aux tubes, la nécessité de déformer le composite alors qu'il est dans un état plus ou moins pâteux, ce qui entraîne en général un désalignement, voir une rupture des fibres, abaissant les caractéristiques de la liaison, et une forte complexité de la liaison grevant son prix de revient et qui n'est justifiée que dans le cas où des flux de traction très élevés sont à transmettre.

L'invention vise donc à obtenir une liaison mécanique simple, moins coûteuse que les liaisons connues, et démontable pour des applications où les flux d'efforts ne nécessitent pas d'épaisseurs importantes de composites. L'intérêt de cette liaison mécanique selon l'invention est qu'elle ne nécessite pas de collage ni d'autres dispositifs tels que des rivets radiaux ou autres, pour permettre la transmission des efforts longitudinaux de traction ou de compression, mais aussi de flexion ce qui permet de garantir la tenue du dispositif à ces efforts, même en cas de cyclage thermique. Cette liaison mécanique est donc particulièrement adaptée aux applications dans lesquelles les efforts de torsion sont faibles devant ceux de traction ou de flexion, telles que des tubes de transfert de fluide ainsi que des axes ou des arbres dimensionnés pour une tenue en vibration liée à la raideur longitudinale du tube.

Un objet principal de l'invention consiste donc en un dispositif de liaison mécanique démontable entre l'extrémité d'un tube en matériau composite et un embout, dispositif selon lequel l'extrémité du tube composite obtenu par enroulement filamentaire de fibres longitudinales est évasée au maximum en forme d'hyperboloïde de révolution et coopère avec un embout également évasé, cette extrémité étant coincée entre ledit embout et au moins une bague externe se vissant sur au moins un filetage de l'embout.

On aurait pû imaginer de réaliser d'autres formes de bobinage avec un évasement par exemple en arc de cercle formant une surface torique, mais ces formes conduiraient soit à un évasement moindre, soit à des pontages naturels des fibres longitudinales; dans ce cas les pontages ne peuvent être combattus que par l'utilisation d'un outillage spécial surtendant les fibres dans la zone de pontage et introduisant des contraintes supplémentaires dans les fibres. Ces pourquoi on a retenu l'évasement en forme d'hyperboloïde de révolution.

Selon une variante de réalisation l'extrémité de l'embout se termine par une couronne munie de filetages externe et interne sur lesquels se vissent respectivement une bague externe et une bague interne, et/ou au moins le profil extérieur de la bague interne est évasé en forme d'hyperboloïde de révolution.

Selon une autre caractéristique de l'invention, l'embout se présente comme une simple couronne munie de filetages externe et interne et/ou les extrémités évasées des tubes à raccorder viennent en butée contre les bords de la couronne et sont chacunes coiffées par des bagues externe et internes.

Selon encore une autre caractéristique de l'invention, l'extrémité du tube composite coopère avec un embout présentant un premier évasement en forme d'hyperboloïde de révolution suivi d'un second évasement en sens inversé, formant rétreint dans la zone d'extrémité.

D'autres caractéristiques particulières et avantages de l'invention ressortiront de la description qui va suivre, d'exemples de réalisation dans lesquels il est fait référence aux dessins annexés qui représentent :

figures 1, 2 et 5 trois vues schématiques en coupe d'une liaison tube-embout ;

figure 3 une vue schématique en coupe d'une liaison de deux tubes ;

figure 4 une variante de réalisation d'une liaison tube-embout ;

figure 6 un exemple de réalisation d'une liaison d'un tube avec une douille d'extrémité.

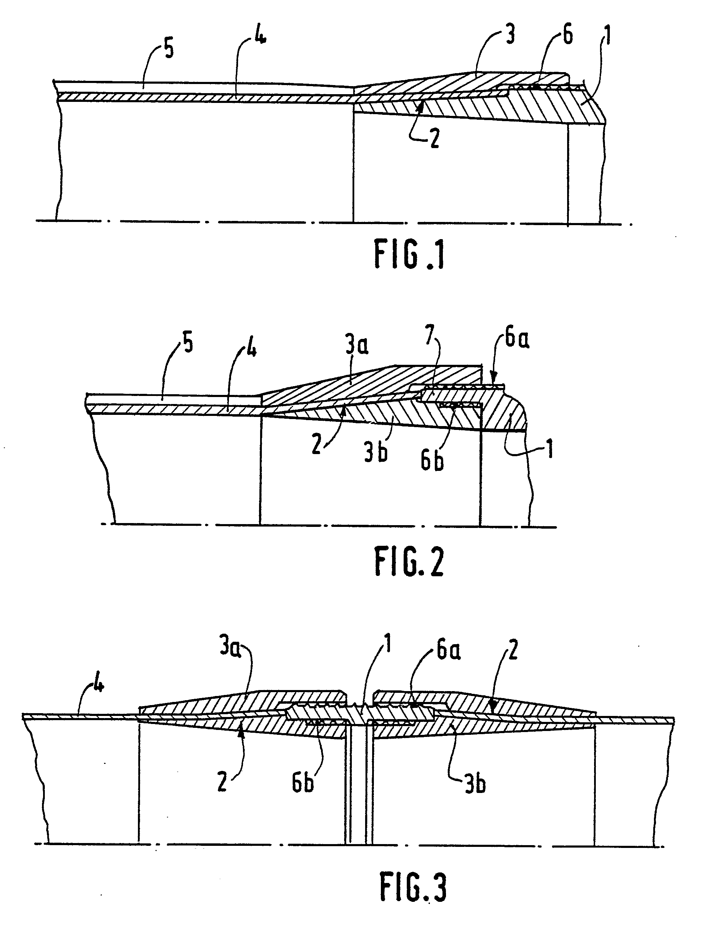

On voit sur la figure 1 un embout métallique 1 dont le profil extérieur 2, dans sa zone d'extrémité où est assurée la liaison avec le tube composite 4, est évasé au maximum en forme d'hyperboloïde de révolution ou suivant un profil d'angle d'évasement plus faible. Le tube composite est réalisé par enroulement filamentaire classique sur un mandrin, de fibres longitudinales 4, c'est-à-dire bobinées avec des angles pouvant aller de 5 à 40° par rapport à l'axe du tube. Les fibres longitudinales sont destinées à fournir la raideur en traction, compression et torsion, et des couches circonférentielles 5 sont prévues sur la partie courante du tube jusqu'à l'entrée du raccord. Ces couches circonférentielles peuvent limiter et même supprimer les risques de détérioration des raideurs du tube s'il y a eu dégradation de la matrice, soit par effet de fatigue, soit par effet thermique. Les fibres longitudinales 4 de la partie courante du tube sont aussi bobinées sur l'embout profilé en forme d'hyperboloïde de révolution, ou sur un mandrin conformé en hyperboloïde de révolution, suivant un profil limite calculé à partir du plus faible angle de bobinage par rapport à la méridienne de telle sorte que toute couche d'angle de bobinage égal ou supérieur à celui ayant servi au calcul de l'hyperboloïde de révolution puisse être déposée sur l'embout profilé ou sur le mandrin sans faire de pontage. L'extrémité du tube utilisée pour la liaison avec l'embout métallique présente ainsi une forme évasée coopérant avec la forme évasée de l'embout. Cette extrémité évasée est ensuite coïncée entre l'embout métallique 1 et une bague externe 3 dont l'extrémité taraudée intérieurement vient se visser sur un filetage 6 l'embout.

Dans une variante de réalisation illustrée à la figure 2, l'extrémité de l'embout métallique 1 se termine par une couronne 7 munie d'un filetage externe 6a et d'un filetage interne 6b. Une bague externe 3a se visse sur le filetage 6a et une autre bague interne 3b se visse sur le filetage 6b. Le profil extérieur 2 de cette bague interne est évasée en forme d'hyperboloïde de révolution comme l'extrémité de l'embout métallique du cas précédent. L'extrémité évasée du tube est de la même façon coïncée entre deux pièces solidaires de l'embout.

Le dispositif de liaison précédemment décrit permet de relier plusieurs tubes ensemble comme on l'a représenté à la figure 3. L'embout métallique 1 se présente alors comme une simple couronne munie de filetages externes 6a et de filetages internes 6b. Les deux extrémités évasées 2 des tubes à raccorder viennent en butée contre les bords de la couronne. Puis les bagues externes et internes (3a et 3b) de chacun sont vissées sur l'embout et coiffent l'extrémité des tubes qui se trouvent ainsi solidement raccordés.

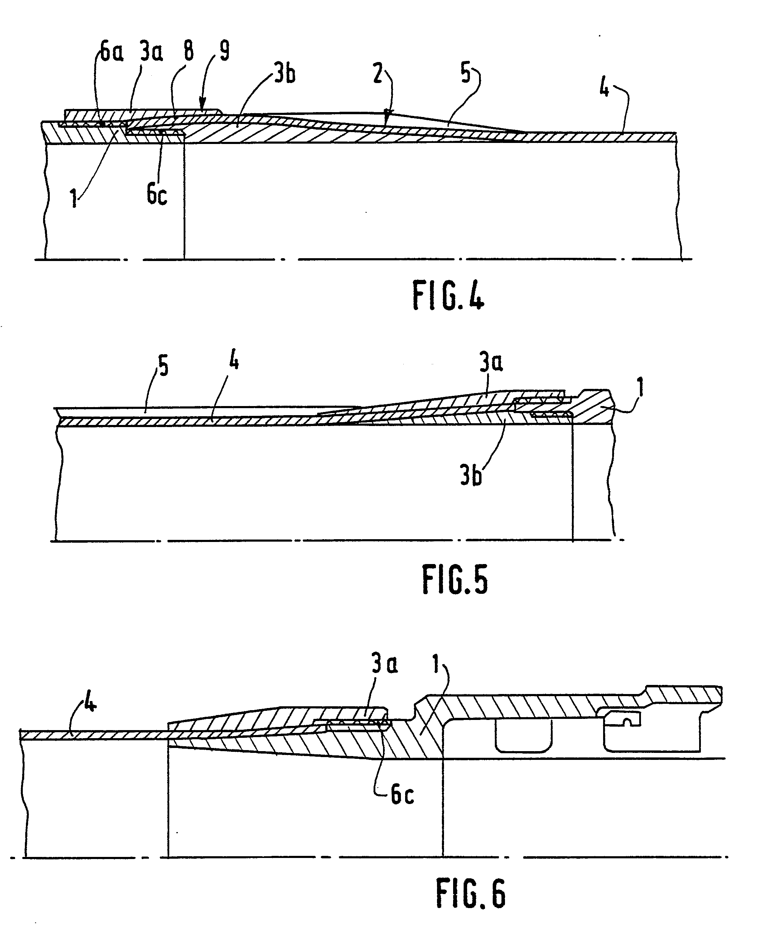

On peut prévoir également un double évasement du tube 4 pour réaliser la liaison représentée à la figure 4. L'embout métallique 1 présente une partie intérieure cylindrique et une partie extérieure avec un décrochement muni d'un filetage 6c. L'extrémité de la partie courante de l'embout possède aussi son filetage 6a. La bague interne 3b a la forme représentée sur la figure. On voit que sa face intérieure est cylindrique et lisse et vient en prolongement de celle de l'embout métallique. Elle se termine par un rebord taraudé 8 qui se visse sur le filetage 6c. La face extérieure de cette bague interne 3b est évasée selon un premier évasement 2 en forme d'hyperboloïde de révolution muni d'un second évasement 9 en sens inverse, formant rétreint dans la zone d'extrémité. Les fibres longitudinales 4 de la partie courante du tube sont bobinées sur cette bague profilée en forme d'hyperboloïde de révolution, jusqu'à son extrémité. Cette dernière est ensuite coïncée par la bague externe 3a qui se visse sur le filetage 6a. Enfin un frettage 5 par enroulement circonférentiel est assuré sur la partie évasée du tube jusqu'à la bague 3a. Cette liaison peut être utilisée pour le jonctionnement de plusieurs tubes destinés par exemple à un transfert de fluide tout en garantissant un diamètre interne lisse.

Quand il s'agit d'assurer une liaison d'extrémité dont le diamètre interne soit lisse, comme dans le cas précédent, mais où un seul évasement du tube soit suffisant, on peut réaliser la liaison représentée à la figure 5 qui est similaire à celle de la figure 2 sauf par le fait que la bague interne 3b est usinée pour présenter une face intérieure cylindrique lisse venant en prolongement de la partie courante du tube 4.

La variante représentée à la figure 6 illustre un exemple de réalisation d'une liaison mécanique d'un tube 4 avec une douille d'extrémité se terminant par une partie en forme d'embout 1 raccordée à la partie évasée du tube, grâce à une bague externe 3, de façon analogue à la représentation de la figure 1.

Dans des cas très particuliers d'applications où de très fortes contraintes sont à prévoir, des rivets pourraient être rajoutés à titre de sécurité pour maintenir la liaison entre les pièces métalliques et le tube composite, au cas où celui-ci serait soumis occasionnellement à des températures très élevées en même temps que des flux de torsion.

On a décrit précédemment divers modes de réalisation utilisant des embouts métalliques. Il convient de noter que l'invention s'applique aussi à des embouts réalisés en matériaux non métalliques tels que par exemple des matériaux composites moulés ou tissés

Le dispositif précédemment décrit sur la base de diverses variantes de réalisation permet d'avoir des liaisons mécaniques au moindre coût pour des applications où les flux d'efforts ne nécessitent pas d'épaisseurs importantes de composites. Ces liaisons permettent généralement la démontabilité des bagues. Comme les jonctions ne sont pas collées, le dispositif possède une meilleure tenue en température et en cyclage thermique. Enfin du fait du profil limite en forme d'hyperboloïde de révolution, on obtient, pour une longueur d'embout donnée, la meilleure tenue en traction possible, l'évasement du tube et par suite son coincement dans l'embout et la bague externe étant maxima.

## Revendications

1.- Dispositif de liaison mécanique démontable entre l'extrémité d'un tube en matériau composite et un embout, caractérisé en ce que l'extrémité du tube composite (4) obtenu par enroulement filamentaire de fibres longitudinales est évasée en forme d'hyperboloïde de révolution et coopère avec un embout (1) également évasé, et en ce que cette extrémité est coincée entre ledit embout et au moins une bague externe (3) se vissant sur au moins un filetage (6) de l'embout.

2.- Dispositif de liaison selon la revendication 1 caractérisé en ce que l'extrémité de l'embout (1) se termine par une couronne (7) munie de filetages externe (6a) et interne (6b) sur lesquels se vissent respectivement une bague externe (3a) et une bague interne (3b).

3.- Dispositif de liaison selon les revendications 1 et 2, caractérisé en ce que au moins le profil extérieur (2) de la bague interne (3b) est évasé en forme d'hyperboloïde de révolution.

4.- Dispositif de liaison selon les revendications 1 et 2, caractérisé en ce que l'embout (1) se présente comme une simple couronne munie de filetages externes (6a) et interne (6b), et en ce que les extrémités évasées (2) des tubes à raccorder viennent en butée contre les bords de la couronne et sont chacunes coiffées par des bagues externes (3a) et internes (3b).

5.- Dispositif de liaison selon la revendication 1, caractérisé en ce que l'extrémité du tube composite (4) coopère avec un embout (1) présentant un premier évasement (2) en forme d'hyperboloïde de révolution suivi d'un second évasement (9) en sens inversé, formant rétreint dans la zone d'extrémité.

6.- Dispositif de liaison selon les revendications 1 et 5, caractérisé en ce que l'embout (1) présente une partie intérieure cylindrique et une partie extérieure avec un décrochement muni d'un filetage (6c).

7.- Dispositif de liaison selon les revendications 1, 5 et 6, caractérisé en ce que la face intérieure de la bague interne (3b) est cylindrique et lisse, venant en prolongement de celle de l'embout (1), et en ce qu'elle se termine par un rebord taraudé (8) qui se visse sur le filetage (6c) de l'embout.

8.- Dispositif de liaison mécanique selon les revendications 1 à 7 prises dans leur ensemble, caractérisé en ce que des couches circonférentielles (5) sont prévues sur la partie courante du tube (4) jusqu'à l'entrée du raccord.

9.- Dispositif de liaison mécanique selon les revendications 1 à 7 prises dans leur ensemble, caractérisé en ce que l'embout (1) est en matériau autre que métallique.

FIG.1

FIG.2

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 548 428 (RUHLE)<br>* Résumé; figure * | 1 | F 16 L 47/00<br>F 16 G 3/02 |
| A | | 7,8 | |
| Y | GB-A- 10 304 (J. ASHBY)(A.D.1910)<br>* Figures * | 1 | |
| A | FR-A-2 594 500 (VETCO-GRAY, INC.)<br>* Résumé; figures * | 1 | |
| A | EP-A-0 239 338 (HERCULES INC.)<br>* Abrégé; figures * | 1 | |

**DOMAINES TECHNIQUES RECHERCHES (Int. Cl.5)**

F 16 L
F 16 C

**Le présent rapport a été établi pour toutes les revendications**

| Lieu de la recherche | Date d'achèvement de la recherche | Examinateur |
|---|---|---|
| LA HAYE | 06-06-1990 | BARTSCH A.W. |

EPO FORM 1503 03.82 (P0402)